# FASCICULE DE BREVET EUROPEEN

(11) **EP 1 810 600 B1**
(45) Date de publication et mention de la délivrance du brevet: **14.05.2008**
(21) Numéro de dépôt: 07356004.7
(22) Date de dépôt: 18.01.2007
(51) Int. Cl.: A47J 31/40

(54) **Procédé et machine de préparation des boissons**
Verfahren und Gerät zur Herstellung von Getränken
Method and machine for the preparation of beverages

(30) Priorité: 20.01.2006 FR 0600519
(43) Date de publication de la demande: 25.07.2007
(73) Titulaire: SEB S.A., 69130 Ecully (FR)
(72) Inventeur: Bienvenu, Denis, 53370 Saint Pierre des Nids (FR); Millot, Alain, 61000 Alencon (FR)
(74) Mandataire: Kiehl, Hubert

(56) Documents cités:
- EP-A- 0 250 810
- US-A- 4 253 385
- US-A- 4 484 515
- US-A1- 2004 197 444
- US-A1- 2005 160 918

## Description

La présente invention est relative à un procédé et une machine de préparation de boisson chaude à partir d'un produit de percolation ou d'infusion contenu dans une dose préfabriquée, tel le café moulu, le thé, le chocolat ou une poudre soluble de café, lait ou chocolat pour le distribuer dans un récipient collecteur.

Une machine de préparation et distribution de boissons chaudes comprend généralement un réservoir d'eau froide, une pompe électrique, un ensemble formant chaudière et une tête d'infusion qui reçoit des doses préfabriquées traversées par l'eau chaude en provenance de la chaudière, la boisson obtenue étant ensuite orientée vers un récipient collecteur. Le document US 4 253 385 décrit un tel appareil qui est une machine à café fonctionnant avec des doses préfabriquées, la chambre d'infusion étant réalisée de manière à pouvoir recevoir de manière étanche une dose de café qui est sous forme de sachet souple perméable à l'eau et renfermant le café moulu. L'eau d'infusion traverse la dose et s'écoule en direction d'une tasse placée en dessous d'un conduit de sortie d'infusion de la machine. Cette machine ne fonctionne qu'avec une dose de café de format unique et est, de ce fait, limitée à la préparation du café uniquement.

Le document US 5 992 298 décrit une machine à café fonctionnant avec des doses de café, l'eau d'infusion étant chauffée par un chauffe-eau instantané avant d'être envoyée dans la chambre d'infusion contenant la dose de café. Lorsque la chambre d'infusion est ouverte et l'élément chauffant alimenté, la machine produit de l'eau chaude ou de la vapeur envoyée par un conduit de vapeur séparé vers un récipient contenant du lait. Cette machine peut préparer d'autres types de boissons, mais en utilisant des dispositifs annexes, tels une buse de vapeur, car la machine n'accepte qu'un seul type de dose de café.

Par ailleurs, les documents US 2005/160918, US 4 484 515 et EP 0 250 810 décrivent des procédés de préparation de boisson infusées comportant une première étape d'infusion réalisée dans un but de prétrempage du produit contenu dans une dose avant l'étape proprement dite d'infusion.

Plus particulièrement, le document US2004/0197444 décrit une machine de préparation de boissons chaudes apte à fonctionner avec plusieurs types de cartouches contenant des produits différents, notamment du café, chocolat ou lait. En fonctionnement, la cartouche, initialement étanche à l'eau, est placée sur son support et est perforée par une première aiguille d'injection d'eau ainsi que par une deuxième aiguille pour permettre l'écoulement de la boisson obtenue. Dès que la température de consigne de l'élément chauffant a été atteinte, la pompe est actionnée pour envoyer une faible quantité d'eau et réaliser un pré-trempage du produit d'infusion. La pompe est ensuite arrêtée et, après une courte période de pré-trempage, elle est alimentée à nouveau et le cycle d'infusion reprend pour obtenir une boisson infusée. La machine comprend également un compresseur qui réalise une purge en fin de cycle pour s'assurer que la cartouche a été complètement vidée de son produit. Une telle machine est prévue pour fonctionner avec des cartouches étanches, comportant des parois internes de forme complexe afin de pouvoir garantir un mélange correct de l'eau et du produit d'infusion et nécessitant une purge par air comprimé en fin de cycle. De surcroît, le débit de la pompe doit être asservi au type de produit à infuser. De ce fait, l'ensemble machine et cartouches forment un système complexe et coûteux de préparation des boissons.

Le but de la présente invention est de remédier à ces inconvénients et de proposer un procédé et une machine de préparation des boissons à partir de doses préfabriquées permettant d'obtenir une boisson de qualité pour tout type de produit d'infusion contenu dans la dose, en utilisant des moyens simples et fiables dans le temps.

Un autre but de l'invention est de proposer un procédé et une machine de préparation des boissons à partir de dose de produit en poudre ou visqueux permettant une bonne dissolution du produit à infuser, ceci de manière économique, avec une machine de construction simplifiée.

Ces buts sont atteints avec un procédé de préparation de boissons infusées en utilisant une pompe pour mettre en circulation l'eau d'infusion en provenance d'un réservoir, via une chaudière, à travers une dose contenant le produit d'infusion, du fait qu'il comprend une première étape de mise en marche de la pompe, à une première température de consigne de la chaudière, pour distribuer un premier volume d'eau chaude d'infusion et au moins une étape intermédiaire de génération de vapeur envoyée à travers la dose en étant produite par la chaudière lors de l'arrêt de la pompe, étape suivie d'une remise en fonctionnement de cette dernière pour distribuer un deuxième volume d'eau d'infusion lorsqu'une deuxième température de consigne a été atteinte par la chaudière.

Ces buts sont également atteints avec une machine de préparation de boissons infusées comprenant un réservoir d'eau d'infusion, relié par une pompe à une chaudière pour envoyer l'eau d'infusion à travers une dose préfabriquée contenant le produit d'infusion, du fait qu'elle comporte des moyens de commande permettant, lorsque la chaudière a atteint une première température de consigne, de démarrer la pompe pour l'envoi d'un premier volume d'eau d'infusion, de déclencher au moins une étape intermédiaire d'arrêt de la pompe permettant à la chaudière de générer de la vapeur envoyée à travers la dose, étape suivie d'une remise en fonctionnement de la pompe pour distribuer un deuxième volume d'eau d'infusion lorsqu'une deuxième température de consigne a été atteinte par la chaudière.

Le procédé de préparation de boisson infusée à partir de dose préfabriquée de produit d'infusion comporte déjà une première étape de chauffage de la chaudière jusqu'à une première température de consigne qui déclenche l'alimentation de la pompe pour mettre en circulation l'eau froide en provenance du réservoir à travers la chaudière. Lors de cette première étape, une certaine quantité d'eau chaude est envoyée ou distribuée à l'intérieur de la dose contenant le produit d'infusion. De préférence, la chaudière est un thermobloc comportant un conduit d'eau ou serpentin d'eau noyé dans une masse d'aluminium, masse qui est en contact avec une résistance électrique. Ce thermobloc présente l'avantage d'avoir une bonne inertie thermique, d'emmagasiner donc des calories qu'il transmet ensuite rapidement au conduit d'eau qu'il renferme. Pour commander le thermobloc, il suffit alors de piloter son alimentation en lisant les informations lues par un capteur de température en contact thermique avec la chaudière, notamment en étant fixé sur une paroi du thermobloc, et en les comparant à des températures de consigne.

Il a été constaté, lors des tests effectués avec des doses comportant différents produits d'infusion, qu'avec un flux d'eau continu, les particules de produit à infuser ont tendance à s'agglutiner, notamment dans le cas d'un produit en poudre ou visqueux, et forment des amas de produit parfois collés aux parois de la dose, ou, dans le cas d'une dose de café moulu, les particules fines de café moulu gonflent et bloquent les orifices de sortie d'infusion de la dose, diminuant le débit de sortie de la boisson infusée.

La solution de l'invention est d'envoyer d'abord une certaine quantité d'eau d'infusion à travers la dose, et de commander ensuite la pompe de manière intermittente, au moins un arrêt de la pompe permettant à la chaudière d'atteindre une température de consigne pour produire de la vapeur distribuée ensuite à travers la dose, la vapeur résiduelle étant ensuite chassée par la pompe lorsqu'elle est alimentée à nouveau au cours d'un même cycle d'infusion pour distribuer de l'eau d'infusion à travers la dose. La vapeur est produite de manière simple, en asservissant l'actionnement de la pompe à la température de la chaudière. Ainsi, on arrête la pompe pendant quelques instants, le temps de permettre à la chaudière de monter en température et de produire de la vapeur, montée en température qui est réalisée rapidement avec un thermobloc en état de fonctionnement, donc déjà chaud. L'énergie de la vapeur sortant du thermobloc et arrivant à l'intérieur de la dose casse les liens entre les particules agglutinées à l'intérieur de celle-ci ou collées aux parois, permettant une meilleure infusion ou dilution du produit. Lors du redémarrage de la pompe, le flux d'eau arrivant dans le thermobloc pousse la vapeur résiduelle vers la dose avec l'envoi d'une nouvelle fraction de volume d'infusion.

Les températures de consigne sont établies en fonction du volume d'eau d'infusion véhiculé par la pompe lors de chaque étape, du débit de la pompe et de l'inertie thermique du thermobloc. Ainsi, avec une même pompe et un même thermobloc, la deuxième température de consigne est inférieure à la première si le deuxième volume d'eau d'infusion est inférieur au premier pour garantir une température constante de l'eau d'infusion.

La solution de l'invention permet d'obtenir une boisson de qualité en utilisant de manière judicieuse les mêmes composants de la machine, sans faire appel à des dispositifs complémentaires, du genre dispositif annexe de production de vapeur, compresseur, etc.

Avantageusement, la mise en marche de la pompe est démarrée lorsqu'une température de consigne de la chaudière a été atteinte et son arrêt est commandé après mesure par un débitmètre du volume distribué. La machine de l'invention comprend dans ce but des moyens de commande qui déclenchent la mise en marche de la pompe lorsqu'une température de consigne de la chaudière a été atteinte et qui commandent l'arrêt de la pompe en fonction d'un signal reçu d'un débitmètre.

Ainsi, le débitmètre mesure la quantité d'eau délivrée par la pompe lors de chaque opération de fonctionnement de la pompe, ladite première étape de mise en marche de la pompe comprenant une phase d'arrêt de la pompe lorsque le débitmètre mesure une première quantité d'eau et ladite étape de remise en fonctionnement de la pompe comprend une phase d'arrêt de la pompe lorsqu'une deuxième quantité d'eau a été mesurée par le débitmètre.

Cette solution est très fiable, car elle permet une mesure exacte du volume envoyé à l'intérieur de la dose, surtout quand le cycle d'infusion est fractionné en plusieurs étapes.

De préférence, le produit d'infusion est une poudre de produit lyophilisé.

Il s'est avéré que le procédé de l'invention trouve mieux son application lorsque le produit à infuser est une poudre de produit déshydraté, ce dernier formant facilement des amas de particules lorsqu'il reçoit l'eau chaude d'infusion. Ainsi, en bombardant ces amas de particules par des bulles de vapeur, on arrive à casser les liens entre les particules et mieux dissoudre le produit dans l'eau d'infusion.

Avantageusement, le procédé de l'invention comprend une première étape de mise en marche de la pompe pour distribuer de l'eau chaude d'infusion suivie d'au moins deux étapes intermédiaires d'arrêt et de redémarrage de la pompe. Les moyens de commande de la machine permettent de réaliser ces étapes du procédé.

Il a été constaté, lors de nombreux tests effectués en laboratoire avec des doses de produit du marché, que, pour garantir une bonne dilution du produit à infuser, il faut au moins deux étapes intermédiaires de purge par la vapeur pour arriver à bien dissoudre un produit pulvérulent.

De préférence, le premier volume d'eau chaude d'infusion correspond à 1/3 du volume total distribué.

La quantité d'eau d'infusion envoyée sur le produit à infuser doit être suffisante pour transformer en liquide le produit pulvérulent, mais pas trop importante non plus pour qu'elle ne sorte pas trop vite sans avoir dilué le produit d'infusion agglutiné alors sous forme de grumeaux à l'intérieur de la dose. Lors des tests effectués avec différentes doses, il a été constaté que 1/3 du volume total d'eau d'infusion envoyé en première étape d'infusion suffit pour dissoudre une grande partie du produit pulvérulent et le transformer en liquide.

Avantageusement, le procédé de l'invention comprend quatre étapes intermédiaires d'arrêt et de redémarrage de la pompe et cette dernière distribue à chaque étape de redémarrage 1/6 du volume total distribué lors d'un cycle d'infusion. Les moyens de commande de la machine actionnent la pompe selon quatre étapes intermédiaires d'arrêt et de redémarrage de la pompe pour que cette dernière distribue à chaque étape de redémarrage 1/6 du volume total distribué lors d'un cycle d'infusion.

Ainsi, après avoir distribué 1/3 du volume d'infusion lors de la première étape, l'envoi du volume restant réparti en quatre phases d'infusion d'un même volume assure la dissolution complète et uniforme du produit contenu dans la dose, ces séquences étant entrecoupées par des purges de vapeur.

Le procédé et la machine de l'invention sont avantageusement utilisés avec une dose comportant des parois perméables à l'eau.

Une telle dose préfabriquée renferme le produit d'infusion à l'intérieur d'une enveloppe perméable à l'eau, du type d'un matériau non tissé réalisé à base de fibres de cellulose. Une telle dose permet de mieux retenir le produit et le dissoudre avant qu'il soit évacué sous forme de boisson vers un récipient collecteur, surtout à des valeurs faibles, de l'ordre de 2 bars de la pression d'infusion.

De préférence, la dose comprend deux chambres, une chambre supérieure renfermant un premier produit d'infusion communiquant par au moins un passage avec une chambre inférieure renfermant un deuxième produit d'infusion.

Ainsi, en utilisant des produits différents dans chacune des chambres, on peut alors obtenir une boisson combinée avec une même dose, telle du chocolat chaud, du café au lait, du cappuccino, etc. Dans une variante avantageuse de l'invention, la chambre supérieure renferme du café moulu qui est traversé en premier par l'eau d'infusion, la boisson obtenue arrivant ensuite par un passage de fluide d'infusion dans la chambre inférieure contenant un produit laitier en poudre.

Avantageusement, ledit passage est prévu en la partie inférieure d'une cheminée de distribution réalisée en la partie centrale d'une paroi de séparation des deux chambres de la dose.

Dans cette configuration, la boisson infusée dans la chambre supérieure est canalisée par un entonnoir central en la partie inférieure de la dose. Lorsque la machine envoie de la vapeur par la même cheminée, les bulles de vapeur sont également canalisées par l'entonnoir central, elles sortent en sa partie inférieure et créent des turbulences en remontant vers le haut, en direction de la paroi de séparation en accélérant ainsi la dilution du produit dans la chambre inférieure.

De préférence, selon le procédé de l'invention, la première température de consigne varie suivant les conditions initiales de température de la chaudière. La machine de l'invention comprend un capteur de température en contact thermique avec la chaudière et les moyens de commande de la machine établissent la première température de consigne lue par le capteur suivant les conditions initiales de la chaudière.

Ainsi, en modifiant la première température de consigne, on obtient, quelles que soient les conditions initiales de température de la chaudière (la chaudière étant froide lors de la réalisation d'une première boisson et plus chaude lorsque la machine réalise une deuxième boisson immédiatement après la première) une bonne température d'injection d'eau à l'intérieur de la dose et de la boisson dans la tasse.

L'invention sera mieux comprise à l'étude des modes de réalisation pris à titre nullement limitatif et illustrés dans les figures annexées dans lesquelles :
- la figure 1 est une représentation schématique de la machine de l'invention;
- la figure 2 représente des courbes comparatives d'évolution des paramètres de la machine lors d'un cycle d'infusion.

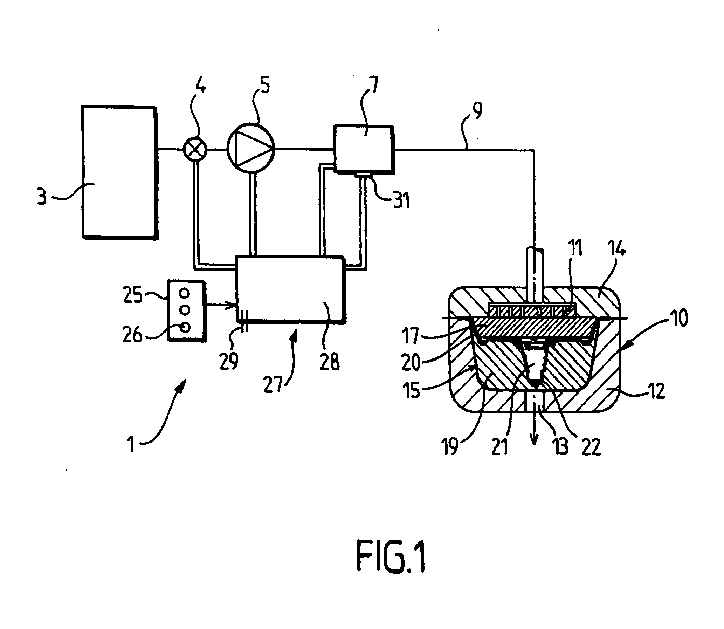

La figure 1 illustre de manière schématique un exemple de réalisation d'une machine 1 de préparation de boissons infusées de l'invention comportant un réservoir d'eau 3 relié par un conduit à une pompe 5, par exemple du type pompe électromagnétique à piston. La pompe 5 aspire l'eau du réservoir et l'envoie dans une chaudière 7, notamment dans un conduit en spirale noyé dans une masse d'aluminium formant thermobloc. Le thermobloc comporte par ailleurs un élément chauffant sous forme d'une résistance électrique noyée également dans la masse d'aluminium ou soudée à celle-ci et alimentée en électricité par les moyens d'alimentation de la machine. L'eau chaude d'infusion sortant de la chaudière 7 arrive par un conduit de fluide 9 à l'intérieur d'une tête d'infusion 10. Le volume d'eau aspiré par la pompe est mesuré par un débitmètre 4. La tête d'infusion 10 est réalisée en deux parties, au moins l'une des parties étant mobile permettant l'ouverture et la fermeture de la tête d'infusion, notamment une première partie de réception d'une dose formant support 12 et une deuxième partie d'injection 14. Lors de la fermeture de la tête d'infusion 10, le support 12 et la partie d'injection 14 définissent un espace interne étanche de réception d'une dose 15 contenant le produit d'infusion. La partie d'injection 14 reçoit l'une des extrémités du conduit de fluide 9 qui débouche juste au-dessus de la dose par plusieurs orifices d'infusion 11. Le support 12 présente en sa partie inférieure un orifice d'écoulement 13 de la boisson infusée vers une tasse placée en dessous. La machine 1 peut comporter une seule tête d'infusion 10 ou deux têtes d'infusion côte à côte, chacune pouvant recevoir une dose contenant le produit d'infusion.

Dans l'exemple décrit, la dose 15 comporte une enveloppe souple perméable à l'eau comportant une chambre supérieure 17 et une chambre inférieure 19 renfermant chacune un produit à infuser. La chambre supérieure 17 est un sachet souple de papier filtre contenant de la mouture de café non compactée. La chambre inférieure 19 est un sachet souple de papier filtre contenant du lait en poudre ou du lait de coco en poudre. Les deux chambres sont séparées par un entonnoir 20 comportant une cheminée centrale 21 de forme conique débouchant par des orifices de sortie 22 à faible distance du fond de la chambre inférieure 19. Plusieurs orifices de sortie 22, de préférence huit, de diamètre calibré, de préférence inférieur à 1 mm, sont disposés sur le pourtour de la paroi latérale de la cheminée 21 dirigeant le fluide d'infusion radialement à l'intérieur de la chambre inférieure 19 de la dose 15.

La machine comporte également un panneau de commande 25 comportant des boutons 26 qui déclenchent le fonctionnement de la machine selon une option choisie par l'utilisateur. L'actionnement de l'un des boutons 26 est transmis aux moyens de commande 27 de la machine qui comprennent un microprocesseur 28 et une alimentation 29. Le microprocesseur 28 comporte une mémoire de stockage d'un programme de fonctionnement de la machine selon un enchaînement logique d'instructions, dont les étapes principales seront décrites dans ce qui suit.

Les moyens de commande 27 commandent le fonctionnement de la pompe 5 et de la chaudière 7, un débitmètre 4 informant les moyens de commande, par des signaux transmis à ces derniers, du volume d'eau d'infusion envoyé par la pompe 5 dans la chaudière 7. La température de la chaudière est mesurée par un capteur de température 31. Le capteur 31 est une résistance dont la valeur ohmique varie en fonction de la température, par exemple une CTN. Le microprocesseur 28 est capable de mesurer la valeur ohmique du capteur et de la comparer à des valeurs prédéterminées correspondant aux différentes valeurs de consigne stockées dans sa mémoire.

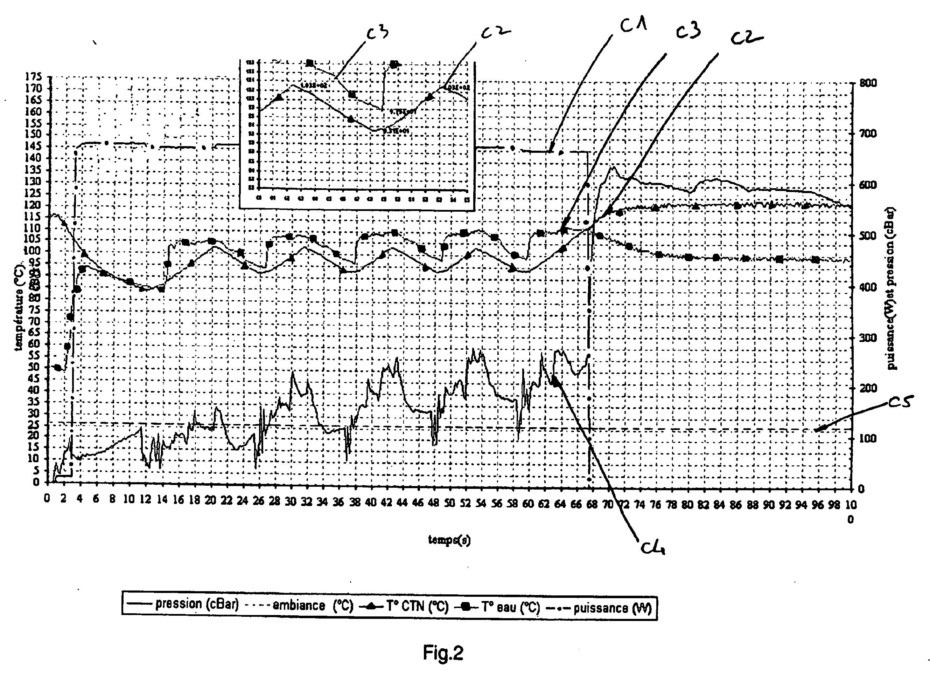

On va maintenant décrire en référence à la figure 2 le fonctionnement de la machine de l'invention. Sur la figure 2, par C1 on a représenté l'évolution de puissance de l'élément chauffant de la chaudière lors d'un cycle d'infusion, le temps étant placé en abscisse. Sur la même figure, par C2 on a représenté l'évolution de la température en °C mesurée par le capteur 31 et par C3 l'évolution de la température de l'eau à la sortie de la chaudière 7, la courbe C5 représentant la température ambiante, toujours en fonction du temps. La température de la courbe C3 est par exemple mesurée par un thermocouple type K positionné à l'entrée de la tête d'infusion 10 et qui mesure donc la température de l'eau chaude d'infusion arrivant sur la dose. La courbe C4 représente, elle, l'évolution de la pression en 10⁻²bar dans le circuit de fluide mesurée entre la pompe 5 et le thermobloc. La pression est mesurée par un transmetteur de pression, par exemple du type C-10 fabriqué par Wika Tronic, qui est connecté sur le circuit d'eau entre la pompe 5 et le thermobloc 7.

Lorsque l'utilisateur veut préparer une boisson, il place une dose 15 à l'intérieur de la tête d'infusion 10 qu'il verrouille, puis il met en marche la machine. Le thermobloc commence à chauffer et le capteur 31 régule celui-ci à une première température de consigne. A titre d'exemple, cette première température de consigne lors de la fabrication d'une première boisson est établie à 120°C. Une fois cette température de consigne atteinte, l'utilisateur peut choisir, en appuyant sur l'un des boutons 26, le type de boisson en fonction du type de dose introduite à l'intérieur de la tête d'infusion, en l'occurrence une dose 15 contenant du café moulu et du lait en poudre. Lorsque le signal du bouton de commande d'infusion arrive au microprocesseur 28, celui-ci commande le fonctionnement de la pompe 5 pour distribuer une première fraction du volume total d'eau d'infusion. Lorsque le débitmètre 4 a transmis l'information conformément à laquelle la pompe a distribué une première fraction du volume d'eau d'infusion, soit, dans l'exemple décrit, 1/3 du volume d'infusion (correspondant, toujours dans cet exemple à 69 cc), à travers la dose 15, le microprocesseur 28 commande l'arrêt de la pompe 5. On remarque sur la figure 2 que cette première étape dure environ 12-14s et que la température mesurée par le capteur 31 (courbe C2) diminue lors du pompage de l'eau d'infusion.

La pompe étant arrêtée, le thermobloc continue à chauffer et la température de l'eau dans le thermobloc continue à monter (courbe C3) arrivant rapidement à environ 100°C et générant de la vapeur, le thermobloc étant régulé à une deuxième température de consigne de, par exemple 100°C, durant le restant du cycle d'infusion. Lorsque le thermobloc génère de la vapeur, la pression augmente dans le circuit de fluide entre la pompe 5 et le thermobloc (courbe C4) et provoque une purge du conduit 9 en direction de la dose 15. Lors de cette purge, les particules de vapeur traversent la chambre supérieure 17 de la dose 15, sont canalisées par la cheminée 21 et sortent par les orifices de sortie 22 en partie inférieure de celle-ci. Arrivées dans la chambre inférieure 19 contenant un mélange de café et de produit laitier, elles remontent vers la paroi de l'entonnoir 20 en créant des turbulences à l'intérieur de la chambre inférieure 19 et vers le haut en accélérant la dilution du produit laitier en poudre.

Lorsque le capteur de température 31 détecte la deuxième température de consigne de 100°C, le microprocesseur 28 commande à nouveau le fonctionnement de la pompe 5 pour distribuer une nouvelle fraction du volume d'eau d'infusion, plus particulièrement 1/6 du volume total distribué dans cet exemple précis, mesuré par le débitmètre 4. La remise en marche de la pompe relance un flux d'eau chaude à travers le conduit 9 jusqu'à l'intérieur de la dose 5, flux d'eau qui pousse rapidement la vapeur résiduelle. Une fois cette nouvelle fraction de volume d'eau envoyée, le microprocesseur arrête à nouveau la pompe 5. Dès l'arrêt de la pompe, la température de l'eau dans le thermobloc monte rapidement (voir la forme en dents de scie de la courbe C3) et génère de la vapeur ce qui a comme résultat une nouvelle purge de la dose 15 avec un nouveau brassage du mélange dans la chambre inférieure 19. On remarque que cette purge a lieu juste avant que le capteur 31 arrive à la deuxième température de consigne, ce qui dure environ 5-6s dans cet exemple, et que, due à l'inertie thermique importante du thermobloc, celui-ci produit de la vapeur avant que le capteur ne détecte la température de consigne fixée.

Ensuite, lorsque la deuxième température de consigne de 100°C du thermobloc est atteinte, le microprocesseur commande à nouveau le démarrage de la pompe 5 pour distribuer une autre fraction de 1/6 du volume d'infusion, puis il l'arrête. Ce fonctionnement est répété plusieurs fois de suite pour envoyer le volume restant d'eau d'infusion, les phases de mise en marche de la pompe 5 étant alternées avec des phases de purge par génération de vapeur.

A la fin du cycle d'infusion, le microprocesseur commande la régulation du thermobloc selon la première température de consigne. Cette première température de consigne est de 120°C pour une première boisson, mais elle est légèrement inférieure, par exemple établie à 110°C pour les cycles suivants, le thermobloc ayant déjà accumulé des calories. Le thermobloc est donc amené ensuite aux conditions initiales de démarrage et il est prêt à commencer un nouveau cycle d'infusion.

Dans l'exemple décrit, le procédé de l'invention comprend une première phase de mise en marche de la pompe, à une première température de consigne du thermobloc, pour distribuer 1/3 du volume d'eau d'infusion, d'arrêt de la pompe jusqu'à ce que le thermobloc atteigne une deuxième température de consigne quand la pompe est commandée pour qu'elle démarre à nouveau et distribue 1/6 du volume d'eau d'infusion, une phase de purge avec la vapeur produite par le thermobloc ayant lieu entre les deux démarrages consécutifs de la pompe; la pompe étant encore redémarrée et arrêtée à nouveau trois fois de suite pour distribuer tout le volume d'eau d'infusion et finir le cycle d'infusion. Le cycle d'infusion comprend ainsi une première phase d'infusion suivie de cinq phases de purge par la vapeur entrecoupées de cinq phases de pompage.

D'autres variantes et modes de réalisation de l'invention peuvent être réalisés sans sortir du cadre de ces revendications.

Ainsi, on peut utiliser un nombre différent de phases de purge et de redémarrage de la pompe, par exemple en le choisissant en fonction des caractéristiques constructives de la chaudière (inertie thermique, capacité, inertie du capteur, etc), du type de dose et de son contenu, etc. On peut, par exemple, distribuer 1/3 du volume d'eau d'infusion en première étape du cycle d'infusion et le reste par deux étapes purge et de redémarrage de la pompe, chacune distribuant 1/3 du volume. Dans un autre exemple, on pourrait distribuer la moitié du volume en une première étape et l'autre moitié après une phase de purge de vapeur.

De la même manière, non seulement le nombre de phases de purge et de redémarrage de la pompe peut être différent, mais également le volume distribué après chaque phase de purge par la vapeur peut être différent par rapport à une phase précédente. Ainsi, on peut imaginer que le volume distribué dans les phases intermédiaires décroît avec le nombre de purges intermédiaires, un volume plus important après la première purge, un volume plus faible après la deuxième, un volume encore plus faible après la troisième, et ainsi de suite.

## Revendications

1. Procédé de préparation de boissons infusées en utilisant une pompe (5) pour mettre en circulation l'eau d'infusion en provenance d'un réservoir (3), via une chaudière (7), à travers une dose (15) contenant le produit d'infusion, **caractérisé en ce qu**'il comprend une première étape de mise en marche de la pompe (5), à une première température de consigne de la chaudière (7), pour distribuer un premier volume d'eau chaude d'infusion et au moins une étape intermédiaire de génération de vapeur envoyée à travers la dose en étant produite par la chaudière lors de l'arrêt de la pompe (5), étape suivie d'une remise en fonctionnement de cette dernière pour distribuer un deuxième volume d'eau d'infusion lorsqu'une deuxième température de consigne a été atteinte par la chaudière (7).

2. Procédé selon la revendication 1, **caractérisé en ce que** la mise en marche de la pompe (5) est démarrée lorsqu'une température de consigne de la chaudière (7) a été atteinte et que son arrêt est commandé après mesure par un débitmètre du volume distribué.

3. Procédé selon l'une des revendications 1 ou 2, **caractérisé en ce que** le produit d'infusion est une poudre de produit lyophilisé.

4. Procédé selon les revendications 1 à 3, **caractérisé en ce qu**'il comprend une première étape de mise en marche de la pompe (5) pour distribuer de l'eau chaude d'infusion suivie d'au moins deux étapes intermédiaires d'arrêt et de redémarrage de la pompe (5).

5. Procédé selon la revendication 4, **caractérisé en ce que** le premier volume d'eau chaude d'infusion correspond à 1/3 du volume total distribué.

6. Procédé selon la revendication 5, **caractérisé en ce qu**'il comprend quatre étapes intermédiaires d'arrêt et de redémarrage de la pompe (5) et que cette dernière distribue à chaque étape de redémarrage 1/6 du volume total distribué lors d'un cycle d'infusion.

7. Procédé selon l'une des revendications précédentes, **caractérisé en ce que** la dose (15) comporte des parois perméables à l'eau.

8. Procédé selon l'une des revendications précédentes, **caractérisé en ce que** la dose (15) comprend deux chambres, une chambre supérieure (17) renfermant un premier produit d'infusion communiquant par au moins un passage avec une chambre inférieure (19) renfermant un deuxième produit d'infusion.

9. Procédé selon la revendication 8, **caractérisé en ce que** ledit passage est prévu en la partie inférieure d'une cheminée (21) de distribution réalisée en la partie centrale d'une paroi de séparation des deux chambres de la dose.

10. Procédé selon l'une des revendications précédentes, **caractérisé en ce que** la première température de consigne varie suivant les conditions initiales de température de la chaudière.

11. Machine de préparation de boissons infusées comprenant un réservoir (3) d'eau d'infusion, relié par une pompe (5) à une chaudière (7) pour envoyer l'eau d'infusion à travers une dose (15) préfabriquée contenant le produit d'infusion, **caractérisée en ce qu**'elle comporte des moyens de commande (27) permettant, lorsque la chaudière (7) a atteint une première température de consigne, de démarrer la pompe (5) pour l'envoi d'un premier volume d'eau d'infusion, de déclencher au moins une étape intermédiaire d'arrêt de la pompe permettant à la chaudière (7) de générer de la vapeur envoyée à travers la dose, étape suivie d'une remise en fonctionnement de la pompe (5) pour distribuer un deuxième volume d'eau d'infusion lorsqu'une deuxième température de consigne a été atteinte par la chaudière (7).

12. Machine selon la revendication 11, **caractérisée en ce que** lesdits moyens de commande (27) déclenchent la mise en marche de la pompe (5) lorsqu'une température de consigne de la chaudière (7) a été atteinte et qu'ils commandent l'arrêt de la pompe (5) en fonction d'un signal reçu d'un débitmètre.

13. Machine selon l'une des revendications 11 ou 12, **caractérisée en ce que** le produit d'infusion est une poudre de produit lyophilisé.

14. Machine selon l'une des revendications 11 à 13, **caractérisée en ce que** les moyens de commande (27) permettent, après une première étape de mise en marche de la pompe (5) pour distribuer de l'eau chaude d'infusion, de commander au moins deux étapes intermédiaires d'arrêt et de redémarrage de la pompe (5).

15. Machine selon la revendication 14, **caractérisé en ce que** le premier volume d'eau correspond à 1/3 du volume total distribué.

16. Machine selon la revendication 15, **caractérisée en ce que** les moyens de commande (27) actionnent par quatre étapes intermédiaires l'arrêt et le redémarrage de la pompe et que cette dernière distribue à chaque étape de redémarrage 1/6 du volume total distribué lors d'un cycle d'infusion.

17. Machine selon l'une des revendications 11 à 16, **caractérisée en ce que** la dose (15) comporte des parois perméables à l'eau.

18. Machine selon l'une des revendications 11 à 17, **caractérisée en ce que** la dose (15) comprend deux chambres, une chambre supérieure (17) renfermant un premier produit d'infusion communiquant par au moins un passage d'eau d'infusion avec une chambre inférieure (19) renfermant un deuxième produit d'infusion.

19. Machine selon l'une des revendications 11 à 18, **caractérisée en ce que** ledit passage est prévu en la partie inférieure d'une cheminée (21) de distribution réalisée en la partie centrale d'une paroi de séparation des deux chambres de la dose.

20. Machine selon l'une des revendications 11 à 19, **caractérisé en ce que** la chaudière comporte un capteur de température (31) en contact thermique avec la chaudière (7) et que les moyens de commande (27) de la machine établissent la première température de consigne lue par le capteur suivant les conditions initiales de la chaudière.

## Claims

1. A method of preparing infused or "brewed" beverages by using a pump (5) for causing brewing water to flow from a reservoir (3), via a boiler (7), through a pre-packed portion (15) containing the brewing preparation, said method being **characterized in that** it comprises a first pump-on step during which the pump (5) is switched on when the boiler (7) is at a first setpoint temperature, so as to deliver a first volume of hot brewing water, and at least one intermediate pump-off step during which steam is generated and is sent through the pre-packed portion by being generated by the boiler while the pump (5) is off, which at least one intermediate step is followed by a step in which said pump is switched back on again so as to deliver a second volume of brewing water once a second setpoint temperature has been reached by the boiler (7).

2. A method according to claim 1, **characterized in that** the pump (5) is switched on once the boiler (7) reaches a setpoint temperature, and said pump is switched off after the delivered volume has been measured by a flow meter.

3. A method according to claim 1 or claim 2, **characterized in that** the brewing preparation is a freeze-dried preparation in powder form.

4. A method according to any one of claims 1 to 3, **characterized in that** it comprises a first pump-on step during which the pump (5) is switched on so as to deliver hot brewing water, followed by at least two intermediate pump stop and pump re-start steps during which the pump (5) is switched off and then switched back on again.

5. A method according to claim 4, **characterized in that** the first volume of hot brewing water corresponds to 1/3 of the total delivered volume.

6. A method according to claim 5, **characterized in that** it includes four intermediate pump stop and pump re-start steps during which the pump is switched off and then switched back on again, and, during each pump re-start step, said pump delivers 1/6 of the total volume delivered during a brewing cycle.

7. A method according to any preceding claim, **characterized in that** the pre-packed portion (15) has walls that are permeable to water.

8. A method according to any preceding claim, **characterized in that** the pre-packed portion (15) comprises two chambers, namely a top chamber (17) enclosing a first brewing preparation and communicating via at least one passage with a bottom chamber (19) enclosing a second brewing preparation.

9. A method according to claim 8, **characterized in that** said passage is provided in the bottom region of a delivery well (21) provided in the central portion of a separator wall for separating the two chambers of the pre-packed portion.

10. A method according to any preceding claim, **characterized in that** the first setpoint temperature varies depending on the initial temperature conditions of the boiler.

11. A machine for preparing infused or "brewed" beverages, which machine comprises a brewing water reservoir (3) connected via a pump (5) to a boiler (7) so as to send brewing water through a pre-packed portion (15) containing the brewing preparation, said machine being **characterized in that** it is provided with control means (27) making it possible, once the boiler (7) has reached a first setpoint temperature, to switch the pump (5) on so as to send a first volume of brewing water, and to trigger at least one intermediate pump-off step enabling the boiler (7) to generate steam to be sent through the pre-packed portion, which intermediate step is a followed by a pump re-start step during which the pump (5) is switched back on so as to deliver a second volume of brewing water once a second setpoint temperature has been reached by the boiler (7).

12. A machine according to claim 11, **characterized in that** said control means (27) cause the pump (5) to be switched on once the boiler (7) reaches a setpoint temperature, and they cause the pump (5) to be switched off as a function of a signal received from a flow meter.

13. A machine according to claim 11 or claim 12, **characterized in that** the brewing preparation is a freeze-dried preparation in powder form.

14. A machine according to any one of claims 11 to 13, **characterized in that** the control means (27) make it possible, after a first pump-on step during which the pump (5) is switched on so as to deliver hot brewing water, to cause at least two intermediate pump stop and pump re-start steps to take place during which the pump (5) is switched off and then switched back on again.

15. A machine according to claim 14, **characterized in that** the first volume of hot brewing water corresponds to 1/3 of the total delivered volume.

16. A machine according to claim 15, **characterized in that**, in four intermediate steps, the control means (27) cause the pump to be switched off and to be switched back on again, and **in that**, during each pump re-start step, said pump delivers 1/6 of the total volume delivered during a brewing cycle.

17. A machine according to any one of claims 11 to 16, **characterized in that** the pre-packed portion (15) has walls that are permeable to water.

18. A machine according to any one of claims 11 to 17, **characterized in that** the pre-packed portion (15) comprises two chambers, namely a top chamber (17) enclosing a first brewing preparation and communicating via at least one passage with a bottom chamber (19) enclosing a second brewing preparation.

19. A machine according to any one of claims 11 to 18, **characterized in that** said passage is provided in the bottom region of a delivery well (21) provided in the central portion of a separator wall for separating the two chambers of the pre-packed portion.

20. A machine according to any one of claims 11 to 19, **characterized in that** the boiler is provided with a temperature sensor (31) that is in thermal contact with the boiler (7), and **in that** the control means (27) of the machine establish the first setpoint temperature read by the sensor depending on the initial temperature conditions of the boiler.

## Patentansprüche

1. Verfahren zur Zubereitung von aufgebrühten Getränken, bei dem eine Pumpe (5) verwendet wird, um das aus einem Behälter (3) kommenden Aufbrühwasser über einen Heizkessel (7) durch eine das Aufbrühprodukt enthaltende Kapsel (15) zirkulieren zu lassen, **dadurch gekennzeichnet, dass** es einen ersten Schritt der Inbetriebnahme der Pumpe (5) bei einer ersten Solltemperatur des Heizkessels (7) umfasst, um eine erste Menge von heißem Aufbrühwasser zu verteilen, und mindestens einen Zwischenschritt des Erzeugens von Dampf, der durch die Kapsel geschickt und durch den Heizkessel erzeugt wird, wenn die Pumpe (5) abgeschaltet ist, wobei dieser Schritt von einer Wiederinbetriebsetzung dieser Pumpe gefolgt wird, um eine zweite Menge von Aufbrühwasser zu verteilen, wenn der Heizkesser (7) eine zweite Solltemperatur erreicht hat.

2. Verfahren nach Anspruch 1, **dadurch gekennzeichnet, dass** die Inbetriebnahme der Pumpe (5) in Gang gesetzt wird, wenn eine Solltemperatur des Heizkessels (7) erreicht wurde und deren Abschalten gesteuert wird, nachdem eine verteilte Menge durch einen Durchflußmesser gemessen wurde.

3. Verfahren nach einem der Ansprüche 1 oder 2, **dadurch gekennzeichnet, dass** das Aufbrühprodukt ein Pulver eines gefriergetrocknete Produkts ist.

4. Verfahren nach einem der Ansprüche 1 bis 3, **dadurch gekennzeichnet, dass** es einen ersten Schritt der Inbetriebnahme der Pumpe (5) zum Verteilen von heißem Aufbrühwasser gefolgt von mindestens zwei Zwischenschritten des Abschaltens und Wiedereinschaltens der Pumpe (5) umfasst.

5. Verfahren nach Anspruch 4, **dadurch gekennzeichnet, dass** die erste Menge von heißem Aufbrühwasser 1/3 der verteilten Gesamtmenge entspricht.

6. Verfahren nach Anspruch 5, **dadurch gekennzeichnet, dass** es vier Zwischenschritte des Abschaltens und Wiedereinschaltens der Pumpe (5) umfasst, und dass letztere bei jedem Schritt des Wiedereinschaltens 1/6 der bei jedem Aufbrühzyklus verteilten Gesamtmenge entspricht.

7. Verfahren nach einem der vorhergehenden Ansprüche, **dadurch gekennzeichnet, dass** die Kapsel (15) wasserdurchlässige Wände aufweist.

8. Verfahren nach einem der vorhergehenden Ansprüche, **dadurch gekennzeichnet, dass** die Kapsel (15) zwei Kammern aufweist, wobei eine obere Kammer (17), die ein erstes Aufbrühprodukt einschließt, über mindestens einen Durchgang mit einer unteren Kammer (19) verbunden ist, die ein zweites Aufbrühprodukt einschließt.

9. Verfahren nach Anspruch 8, **dadurch gekennzeichnet, dass** der Durchgang im unteren Teil eines Verteilungsschachts (21) vorgesehen ist, der im zentralen Teil einer Trennwand zwischen der beiden Kammern der Kapsel ausgebildet ist.

10. Verfahren nach einem der vorhergehenden Ansprüche, **dadurch gekennzeichnet, dass** die erste Solltemperatur entsprechend der Ausgangswerte der Temperatur des Heizkessels variiert.

11. Maschine zum Zubereiten von aufgebrühten Getränken, mit einem Behälter (3) für das Aufbrühwasser, der über eine Pumpe (5) mit einem Heizkessel (7) verbunden ist, um Aufbrühwasser durch eine vorgefertigte, das Aufbrühprodukt enthaltende Kapsel (15) zu schicken, **dadurch gekennzeichnet, dass** sie Steuermittel (27) aufweist, die es ermöglichen, wenn der Heizkessel (7) eine erste Solltemperatur erreicht hat, die Pumpe (5) in Gang zu setzen, um eine erste Menge von Aufbrühwasser zu schicken, mindestens einen Zwischenschritt des Abschaltens der Pumpe auszulösen, der es dem Heizkessel (7) ermöglicht, Dampf zu erzeugen, der durch die Kapsel hindurch geschickt wird, wobei dieser Schritt von einer Wiederinbetriebsetzung der Pumpe (5) gefolgt wird, um eine zweite Menge von Aufbrühwasser zu verteilen, wenn der Heizkessel (7) eine zweite Solltemperatur erreicht hat.

12. Maschine nach Anspruch 11, **dadurch gekennzeichnet, dass** die Steuermittel (27) die Inbetriebnahme der Pumpe (5) auslösen, wenn eine Solltemperatur des Heizkessels (7) erreicht wurde, und das Abschalten der Pumpe (5) in Abhängigkeit von einem aus einem Durchflußmesser erhaltenen Signal steuern.

13. Maschine nach einem der Ansprüche 11 oder 12, **dadurch gekennzeichnet, dass** das Aufbrühprodukt ein Pulver eines gefriergetrockneten Produkts ist.

14. Maschine nach einem der Ansprüche 11 bis 13, **dadurch gekennzeichnet, dass** die Steuermittel (27) es nach einem ersten Schritt der Inbetriebnahme der Pumpe (5) zum Verteilen von heißem Aufbrühwasser ermöglichen, mindestens zwei Zwischenschritte des Abschaltens und Wiedereinschaltens der Pumpe (5) zu steuern.

15. Maschine nach Anspruch 14, **dadurch gekennzeichnet, dass** die erste Wassermenge 1/3 der verteilten Gesamtmenge entspricht.

16. Maschine nach Anspruch 15, **dadurch gekennzeichnet, dass** die Steuermittel (27) in vier Zwischenschritten das Abschalten und Wiedereinschalten der Pumpe betätigen, und dass bei jedem Schritt des Wiedereinschaltens die Pumpe bei einem Aufbrühzyklus 1/6 der verteilten Gesamtmenge verteilt.

17. Maschine nach einem der Ansprüche 11 bis 16, **dadurch gekennzeichnet, dass** die Kapsel (15) wasserdurchlässige Wände aufweist.

18. Maschine nach einem der Ansprüche 11 bis 17, **dadurch gekennzeichnet, dass** die Kapsel (15) zwei Kammern aufweist, wobei eine obere Kammer (17), die ein erstes Aufbrühprodukt einschließt, über mindestens einen Durchgang mit einer unteren Kammer (19) verbunden ist, die ein zweites Aufbrühprodukt einschließt.

19. Maschine nach einem der Ansprüche 11 bis 18, **dadurch gekennzeichnet, dass** der Durchgang im unteren Teil eines Verteilungsschachts (21) vorgesehen ist, der im zentralen Teil einer Trennwand zwischen der beiden Kammern der Kapsel ausgebildet ist.

20. Maschine nach einem der Ansprüche 11 bis 19, **dadurch gekennzeichnet, dass** der Heizkessel einen Temperatursensor (31) aufweist, der in thermischem Kontakt mit dem Heizkessel (7) ist, und dass die Steuermittel (27) der Maschine eine erste Solltemperatur aufstellen, die vom Sensor entsprechend der Ausgangwerte des Heizkessels gelesen wird.
